# EUROPÄISCHE PATENTSCHRIFT

(11) **EP 2 760 712 B1**
(45) Veröffentlichungstag und Bekanntmachung des Hinweises auf die Patenterteilung: **20.06.2018**
(21) Anmeldenummer: 12745840.4
(22) Anmeldetag: 07.08.2012
(51) Int. Cl.: B60T 7/04, B60T 7/12, B60T 8/40, B60T 8/44, B60T 11/10, B60T 11/18, B60T 11/20, B60T 11/224, B60T 13/10, B60T 13/12, B60T 13/74, B60T 17/22, B60T 8/1755

(54) **PRIMÄRKOLBENBAUGRUPPE FÜR EINEN HAUPTBREMSZYLINDER EINES BREMSSYSTEMS EINES FAHRZEUGS, HERSTELLUNGSVERFAHREN FÜR EIN BREMSGERÄT UND VERFAHREN ZUM BETREIBEN EINES BREMSGERÄTS**
PRIMARY PISTON ASSEMBLY FOR A MASTER BRAKE CYLINDER OF A VEHICLE BRAKING SYSTEM, PRODUCTION METHOD FOR A BRAKING UNIT AND METHOD FOR OPERATING A BRAKING UNIT
ENSEMBLE DE PISTONS PRIMAIRES POUR UN MAÎTRE-CYLINDRE D'UN SYSTÈME DE FREINAGE D'UN VÉHICULE, PROCÉDÉ DE FABRICATION POUR UN APPAREIL DE FREINAGE ET PROCÉDÉ PERMETTANT DE FAIRE FONCTIONNER UN APPAREIL DE FREINAGE

(30) Priorität: 30.09.2011 DE 102011083827
(43) Veröffentlichungstag der Anmeldung: 06.08.2014
(73) Patentinhaber: Robert Bosch GmbH, 70442 Stuttgart (DE)
(72) Erfinder: OVERZIER, Frank, 71032 Boeblingen (DE); MAYER, Jochen, 89537 Giengen An Der Brenz (DE)
(86) Internationale Anmeldenummer: PCT/EP2012/065419
(87) Internationale Veröffentlichungsnummer: WO 2013/045156

(56) Entgegenhaltungen:
- EP-A2- 2 189 345
- WO-A1-2011/098178
- DE-A1- 10 346 117
- DE-A1-102005 017 958
- DE-A1-102008 001 061
- DE-A1-102008 001 522
- DE-A1-102008 064 394
- DE-A1-102009 028 034
- DE-A1-102009 045 415
- DE-A1-102009 047 263

## Beschreibung

Die Erfindung betrifft eine Primärkolbenbaugruppe für einen Hauptbremszylinder eines Bremssystems eines Fahrzeugs. Ebenso betrifft die Erfindung ein Herstellungsverfahren für ein Bremsgerät mit zumindest einem Hauptbremszylinder und einer Bremskraftverstärkervorrichtung. Des Weiteren betrifft die Erfindung ein Verfahren zum Betreiben eines Bremsgeräts.

### Stand der Technik

In der DE 10 2009 028 034 A1 ist ein hydraulischer Hauptbremszylinder beschrieben. Der hydraulische Hauptbremszylinder weist eine Primärkolbenkomponente mit einem Kolbenbauteil auf, wobei die Primärkolbenkomponente mittels einer Fahrerbremskraft so verstellbar ist, dass ein mit Flüssigkeit befüllbares Druckkammervolumen einer Druckkammer des hydraulischen Hauptbremszylinders reduzierbar ist. Außerdem soll mittels eines Bremskraftverstärkers eine Bremsunterstützungskraft zusätzlich so auf die erste Primärkolbenkomponente ausübbar sein, dass auch mittels der Bremsunterstützungskraft das mit Flüssigkeit befüllbare Druckkammervolumen der Druckkammer zusätzlich reduzierbar ist.

### Offenbarung der Erfindung

Die Erfindung schafft eine Primärkolbenbaugruppe für einen Hauptbremszylinder eines Bremssystems eines Fahrzeugs mit den Merkmalen des Anspruchs 1, ein Bremsgerät für ein Bremsgerät eines Fahrzeugs mit den Merkmalen des Anspruchs 4, ein Bremssystem für ein Fahrzeug mit den Merkmalen des Anspruchs 8, ein Herstellungsverfahren für ein Bremsgerät mit zumindest einem Hauptbremszylinder und einer Bremskraftverstärkervorrichtung mit den Merkmalen des Anspruchs 9, ein Herstellungsverfahren für ein Bremssystem eines Fahrzeugs mit den Merkmalen des Anspruchs 11. Die erste Primärkolbenkomponente und/oder die zweite Primärkolbenkomponente können jeweils ein Primärkolben/Stangenkolben sein. Es wird jedoch darauf hingewiesen, dass die erste Primärkolbenkomponente und die zweite Primärkolbenkomponente nicht auf eine Ausbildung als Primärkolben oder Stangenkolben beschränkt sind. Insbesondere ist die Ausbildbarkeit der ersten Primärkolbenkomponente und der zweiten Primärkolbenkomponente nicht auf einen bestimmten Typ eines Primärkolbens oder eines Stangenkolbens limitiert.
Die erste Primärkolbenkomponente und/oder die zweite Primärkolbenkomponente können einstückig/einteilig ausgebildet sein. Ebenso können die erste Primärkolbenkomponente und/oder die zweite Primärkolbenkomponente auch aus mehreren zusammengesetzten Untereinheiten aufgebaut sein. Es wird darauf hingewiesen, dass die Verwendung des Begriffs "Bauteil" die Ausbildbarkeit des ersten Kolbenbauteils und/oder des zweiten Kolbenbauteils auch nicht auf eine einstückige Ausbildung festlegt. Ebenso können das erste Kolbenbauteil und/oder das zweite Kolbenbauteil mit mindestens einer weiteren Komponente der zugeordneten Primärkolbenkomponente einstückig/einteilig ausgebildet sein.

### Vorteile der Erfindung

Die vorliegende Erfindung realisiert eine Trennung/Unterteilung eines in eine Druckkammer eines Hauptbremszylinders hineinverstellbaren Primärkolben/Stangenkolben in verschiedene Segmente/Kolben/Bolzenbauteile. Mittels der realisierten Trennung kann eine gewünschte (Gesamt-)Einbremsfläche variiert werden. Wie unten genauer ausgeführt wird, ist insbesondere mittels der realisierten Trennung die von einem Fahrer bei einem Ausfall der Bremskraftverstärker-Aktoreinrichtung aufzubringende Einbremskraft zum Aufbauen eines Bremsdrucks in der jeweiligen Druckkammer des Hauptbremszylinders reduzierbar. Dies erleichtert einem Fahrer das Einbremsen in den Hauptbremszylinder gerade bei einem Ausfall der Bremskraftverstärker-Aktoreinrichtung.

Bevorzugter Weise ist eine Übertragung der Fahrerbremskraft auf die zweite Primärkolbenkomponente unterbunden/verhindert. Auf diese Weise ist gewährleistbar, dass der Fahrer bei einem Einbremsen in die Druckkammern des Hauptbremszylinders nach einem Ausfall der Bremskraftverstärker-Aktoreinrichtung lediglich den auf die erste Primärkolbenkomponente/das erste Kolbenbauteil einwirkenden Druck entgegen wirken muss. Auf diese Weise ist die oben beschriebene Reduzierung der von dem Fahrer aufzubringenden Einbremskraft bei dem Ausfall der Bremskraftverstärker-Aktoreinrichtung verlässlich gewährleistbar. Das erste Kolbenbauteil weist eine durchgehende Aussparung auf, innerhalb welcher das zweite Kolbenbauteil zumindest teilweise verstellbar angeordnet ist. Beispielsweise kann das erste Kolbenbauteil ringförmig ausgebildet sein. Dies gewährleistet eine vorteilhafte Unabhängigkeit der Verstellbarkeit der beiden Kolbenbauteile unbeeinträchtigt von der Stellung/Position des anderen Kolbenbauteils. Insbesondere ist es somit möglich, wahlweise den in dem Druckkammervolumen vorliegenden Bremsdruck mittels eines Verstellens ausschließlich des ersten Kolbenbauteils, ausschließlich des zweiten Kolbenbauteils oder der beiden Kolbenbauteile zusammen zu variieren. Durch das Verstellen des ersten Kolbenbauteils mittels der Fahrerbremskraft mindestens ist eine Schnüffelbohrung des Hauptbremszylinders abdichtbar. Dies ist auf einfache Weise durch die äußere Ausbildung des ersten Kolbenbauteils realisierbar. Somit kann selbst bei einem Ausfall der Bremskraftverstärker-Aktoreinrichtung noch mittels der Fahrerbremskraft auf einfache Weise die mindestens eine Schnüffelbohrung, welche das variierbare Druckkammervolumen mit einem Bremsflüssigkeitsreservoir verbindet, abgedichtet und durch Verstellen des ersten Kolbenbauteils der Bremsdruck in dem variierbaren Druckkammervolumen verlässlich gesteigert werden. Somit ist trotz Ausfalls der Bremskraftverstärker-Aktoreinrichtung noch ein verlässliches Einbremsen in die Druckkammer auf einfache Weise ausführbar. Ferner ragt ein von dem ersten Kolbenbauteil weggerichteter erster Endabschnitt der ersten Primärkolbenkomponente in einen Innenraum hinein, welcher von mindestens einem von dem zweiten Kolbenbauteil weggerichteten zweiten Endabschnitt der zweiten Primärkolbenkomponente aufgespannt wird. Auf diese Weise ist es trotz der Anordnung des zweiten Kolbenbauteils in der durchgehenden Aussparung des ersten Kolbenbauteils noch möglich, den ersten Kraftübertragungskontakt zwischen mindestens einem ersten Kraftübertragungselement, wie beispielsweise einer Eingangsstange und/oder einer zumindest teilweise elastischen Kraftübertragungskomponente, wie insbesondere einer Reaktionsscheibe, zu bewirken, wobei gleichzeitig der zweite Kraftübertragungskontakt zwischen dem zweiten Kolbenbauteil und mindestens einem zweiten Kraftübertragungselement, wie z. B. einem Verstärkerkörper, welches das mindestens eine erste Kraftübertragungselement zumindest teilweise räumlich umgibt, vorliegen kann. Wie unten genauer ausgeführt wird, können somit auch Komponenten/Elemente einer herkömmlichen Bremskraftverstärkervorrichtung zusammen mit der erfindungsgemäßen Primärkolbenbaugruppe eingesetzt werden.

Auch die erste Primärkolbenkomponente kann über einen dritten Kraftübertragungskontakt zwischen der ersten Primärkolbenkomponente und zumindest der Bremskraftverstärker-Aktoreinrichtung eine zweite Bremsunterstützungskraft derart übertragbar sein, dass durch ein Verstellen des ersten Kolbenbauteils mittels der zweiten Bremsunterstützungskraft das mit Flüssigkeit befüllbare Druckkammervolumen reduzierbar ist. Somit kann der Fahrer mittels der Bremskraftverstärker-Aktoreinrichtung zusätzlich bei dem Verstellen der ersten Primärkolbenkomponente/dem ersten Kolbenbauteil kraftmäßig unterstützt werden.

Die oben beschriebenen Vorteile sind auch bei einem Bremsgerät für ein Bremssystem eines Fahrzeugs mit einer derartigen Primärkolbenbaugruppe und einem Hauptbremszylinder und/oder einer Bremskraftverstärkervorrichtung gewährleistet.

In einer vorteilhaften Weiterbildung umfasst das Bremsgerät eine zumindest teilweise elastische Kraftübertragungskomponente, auf welche über zumindest eine Eingangsstange die auf ein an dem Bremssystem angeordnetes Bremsbetätigungselement ausgeübte Fahrerbremskraft übertragbar ist, wobei die erste Primärkolbenkomponente die zumindest teilweise elastische Kraftübertragungskomponente so kontaktiert, dass der erste Kraftübertragungskontakt vorliegt und die Fahrerbremskraft auf die erste Primärkolbenkomponente übertragbar ist. Ebenso kann das Bremsgerät einen Verstärkerkörper umfassen, welcher mittels der Bremskraftverstärker-Aktoreinrichtung verstellbar ist, wobei die zweite Primärkolbenkomponente den Verstärkerkörper so kontaktiert, dass der zweite Kraftübertragungskontakt vorliegt und die erste Bremsunterstützungskraft auf die zweite Primärkolbenkomponente übertragbar ist. Mittels einer derartigen Ausbildung des Bremsgeräts sind zumindest der erste Kraftübertragungskontakt und der zweite Kraftübertragungskontakt verlässlich realisierbar.

Des Weiteren kann der Verstärkerkörper die zumindest teilweise elastische Kraftübertragungskomponente so kontaktieren, dass der dritte Kraftübertragungskontakt vorliegt und die zweite Bremsunterstützungskraft auf die erste Bremskolbenkomponente übertragbar ist. Dies gewährleistet eine vorteilhafte Unterstützung des Fahrers bei dem Verstellen der ersten Primärkolbenkomponente mittels der Bremskraftverstärker-Aktoreinrichtung.

Als Alternative oder als Ergänzung dazu kann der Verstärkerkörper eine durchgehende Öffnung aufweisen, wobei die Eingangsstange und/oder die zumindest teilweise elastische Kraftübertragungskomponente zumindest teilweise innerhalb der durchgehende geführt sind. Für das Bremsgerät können somit auch ein Verstärkerkörper, eine Eingangsstange und/oder ein zumindest teilweise elastische Kraftübertragungskomponente, wie beispielsweise eine Reaktionsscheibe, einer herkömmlichen Bremskraftverstärkervorrichtung verwendet werden. Somit kann bei der Ausstattung/Herstellung des Bremsgeräts auf bereits in hoher Stückzahl produzierte und kostengünstige Bauteile zurückgegriffen werden.

Realisierbar sind die vorausgehend beschriebenen Vorteile auch mittels eines Bremssystems für ein Fahrzeug mit mindestens einem Bremskreis und einer korrespondierenden Primärkolbenbaugruppe und/oder einem entsprechenden Bremsgerät.

Auch mittels der entsprechenden Herstellungsverfahren für ein Bremsgerät mit zumindest einem Hauptbremszylinder und einer Bremskraftverstärkervorrichtung oder für ein Bremssystem eines Fahrzeugs sind die oben aufgezählten Vorteile auf einfache Weise realisierbar.

Des Weiteren können die Vorteile auch durch ein Ausführen des korrespondierenden Verfahrens zum Betreiben eines Bremsgeräts bewirkt werden.

### Kurze Beschreibung der Zeichnungen

Weitere Merkmale und Vorteile der vorliegenden Erfindung werden nachfolgend anhand der Figuren erläutert. Es zeigen:
- Fig. 1A bis 1C: drei schematische Darstellungen einer ersten Ausführungsform der Primärkolbenbaugruppe;
- Fig. 2: eine schematische Darstellung einer zweiten Ausführungsform der Primärkolbenbaugruppe;
- Fig. 3: ein Flussdiagramm zum Darstellen einer Ausführungsform des Herstellungsverfahrens; und
- Fig. 4: ein Flussdiagramm zum Darstellen einer Ausführungsform des Verfahrens zum Betreiben eines Bremsgeräts.

### Ausführungsformen der Erfindung

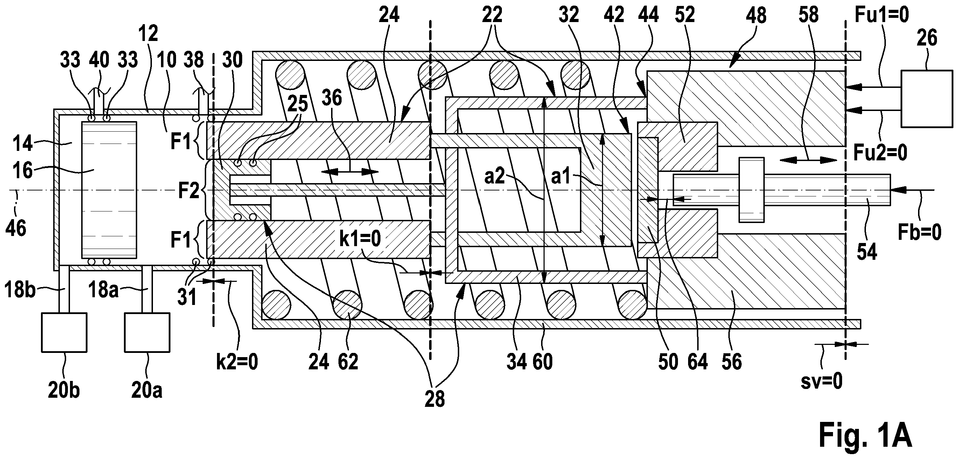

Fig. 1A bis 1C zeigen drei schematische Darstellungen einer ersten Ausführungsform der Primärkolbenbaugruppe.

Die in den Fig. 1A bis 1C schematisch wiedergegebene Primärkolbenbaugruppe ist in einem Bremsgerät oder in einem (hydraulischen) Bremssystem eines Fahrzeugs einsetzbar. Die Primärkolbenbaugruppe kann dazu genutzt werden, zumindest einen ersten Bremsdruck in einer ersten Druckkammer 10 eines Hauptbremszylinders 12 zu variieren. Optionalerweise kann der Hauptbremszylinder 12 auch eine zweite Druckkammer 14 umfassen. Vorzugsweise ist in diesem Fall der in der zweiten Druckkammer 14 vorliegende zweite Bremsdruck mittels eines zwischen der ersten Druckkammer 10 und der zweiten Druckkammer 14 verstellbar angeordneten Schwimmkolbens 16 variierbar. Das mit der Primärkolbenbaugruppe ausgestattete Bremssystem kann somit einen über eine erste Zufuhrleitung 18a an die erste Druckkammer 10 angebundenen ersten Bremskreis 20a und einen über eine zweite Zufuhrleitung 18b an die zweite Druckkammer 14 angebundenen zweiten Bremskreis 20b umfassen. Die in den Fig. 1A bis 1C schematisch wiedergegebene Darstellung des Bremssystems als zweikreisiges Bremssystem ist jedoch lediglich beispielhaft zu interpretieren. Außerdem ist die Einsetzbarkeit der Primärkolbenbaugruppe nicht auf eine bestimmte Ausbildung des mindestens einen Bremskreises 20a und 20b des damit ausgestatteten Bremssystems limitiert. Ebenso kann anstelle eines Tandem-Hauptbremszylinders auch ein anderer Hauptbremszylindertyp für den Hauptbremszylinder 12 eingesetzt werden.

Die Primärkolbenbaugruppe umfasst eine erste Primärkolbenkomponente 22 mit einem ersten Kolbenbauteil 24. Über einen ersten Kraftübertragungskontakt zwischen der ersten Primärkolbenkomponente 22 und zumindest einem an dem Bremssystem angeordneten (nicht skizzierten) Bremsbetätigungselement ist eine Fahrerbremskraft Fb auf die erste Primärkolbenkomponente 22 übertragbar. Dies ist so ausführbar, dass durch ein Verstellen des ersten Kolbenbauteils 24 mittels der Fahrerbremskraft Fb ein mit Flüssigkeit befüllbares Druckkammervolumen der ersten Druckkammer 10 des Hauptbremszylinders 12 reduzierbar ist. Somit kann mittels des Verstellens der Primärkolbenkomponente 22 der in der ersten Druckkammer 10, bzw. dem Druckkammervolumen der ersten Druckkammer 10, vorliegende erste Bremsdruck gesteigert werden.

Außerdem ist das mit Flüssigkeit befüllbare Druckkammervolumen der ersten Druckkammer 10 zusätzlich mittels einer von einer Bremskraftverstärker-Aktoreinrichtung 26 bereitgestellten ersten Bremsunterstützungskraft Fu1 reduzierbar. Dies ist durch eine zweite Primärkolbenkomponente 28 mit einem zweiten Kolbenbauteil 30 bewirkbar. Die erste Bremsunterstützungskraft Fu1 ist über einen zweiten Kraftübertragungskontakt zwischen der zweiten Primärkolbenkomponente 28 und zumindest der Bremskraftverstärker-Aktoreinrichtung 26 auf die zweite Primärkolbenkomponente 28 derart übertragbar, dass durch ein Verstellen des zweiten Kolbenbauteils 30 mittels der ersten Bremsunterstützungskraft Fu1 das mit Flüssigkeit befüllbare Druckkammervolumen der ersten Druckkammer 10 reduzierbar ist.

Die Bremskraftverstärker-Aktoreinrichtung 26 kann beispielsweise ein elektromechanisches Gerät oder eine Hydraulikeinrichtung sein. Die Ausbildbarkeit der Bremskraftverstärker-Aktoreinrichtung 26 ist jedoch nicht auf diese genannten Beispiele limitiert.

Die Primärkolbenbaugruppe aus der ersten Primärkolbenkomponente 22 und der zweiten Primärkolbenkomponente 28 realisiert eine Trennung/Unterteilung eines Primärkolbens/Stangenkolbens, welcher zumindest teilweise zum Steigern des ersten Bremsdrucks in der ersten Bremskammer 10 in diese hineinverstellbar ist. Durch die realisierte Trennung/Unterteilung kann eine Gesamt-Einbremsfläche, entlang welcher in die erste Bremskammer hineingebremst wird, wahlweise auf ausschließlich eine das Druckkammervolumen begrenzende erste Einbremsfläche F1 des ersten Kolbenbauteils 24, ausschließlich auf eine das Druckkammervolumen begrenzende zweite Einbremsfläche F2 des zweiten Kolbenbauteils 30 oder auf eine Summe der ersten Einbremsfläche F1 und der zweiten Einbremsfläche F2 festgelegt werden. Unter einer Einbremsfläche F1 und F2 kann eine das Druckkammervolumen der ersten Druckkammer 10 begrenzende Oberfläche des jeweiligen Kolbenbauteils 24 und 30 verstanden werden, welche für eine Reduzierung des Druckkammervolumens verschiebbar ist. Da sich die einem Einbremsen entgegenwirkende Gegenkraft aus dem in der ersten Druckkammer 10 vorliegenden ersten Bremsdruck und der Einbremsfläche F1 oder F2 ergibt, kann mittels der Trennung/Unterteilung auch die Gegenkraft auf einfache Weise variiert werden.

Bevorzugter Weise liegt kein Kraftübertragungskontakt zwischen dem (nicht skizzierten) Bremsbetätigungselement und der zweiten Primärkolbenkomponente 28 vor. Man kann dies auch so umschreiben, dass (selbst) eine Teilübertragung der Fahrerbremskraft Fb auf die zweite Primärkolbenkomponente 28/das zweite Kolbenbauteil 30 unterbunden/verhindert ist. Somit muss der Fahrer mittels der Fahrerbremskraft Fb bei einem Vorliegen der Bremskraftverstärker-Aktoreinrichtung 26 in einem funktionsbeeinträchtigtem Zustand lediglich die erste Primärkolbenkomponente 22 verstellen. Der Fahrer bremst somit nach einem Ausfall der Bremskraftverstärker-Aktoreinrichtung 26 lediglich an der ersten Einbremsfläche F1 in die erste Druckkammer 10 hinein. Dies bewirkt eine signifikante Reduzierung der von dem Fahrer zum Aufbauen eines ersten Bremsdrucks in der ersten Druckkammer 10 aufzubringenden Fahrerbremskraft Fb.

Optionalerweise kann eine zweite Bremsunterstützungskraft Fu2 über einen dritten Kraftübertragungskontakt zwischen der ersten Primärkolbenkomponente 22 und zumindest der Bremskraftverstärker-Aktoreinrichtung 26 auf die erste Primärkolbenkomponente 22 derart übertragbar sein, dass durch ein Verstellen des ersten Kolbenbauteils 24 mittels der zweiten Bremsunterstützungskraft Fu2 das mit Flüssigkeit befüllbare Druckkammervolumen der ersten Druckkammer 10 reduzierbar ist.

Somit kann der Fahrer auch bei dem Verstellen des ersten Kolbenbauteils 24 kraftmäßig mittels der Bremskraftverstärker-Aktoreinrichtung 26 unterstützt werden.

Bei der dargestellten Ausführungsform ist die erste Primärkolbenkomponente 22 aus dem ersten Kolbenbauteil 24 und einer davon getrennt hergestellten ersten Kraftkopplung 32 aufgebaut. Ebenso umfasst die zweite Primärkolbenkomponente 28 das zweite Kolbenbauteil 30 und eine einer davon getrennt hergestellte zweite Kraftkopplung 34. Die erste Primärkolbenkomponente 22 und/oder die zweite Primärkolbenkomponente 28 können jedoch auch einstückig/einteilig ausgebildet sein. In einer alternativen Ausführungsform können die erste Kraftkopplung 32 und/oder die zweite Kraftkopplung 34 auch aus mindestens drei getrennt hergestellten Untereinheiten zusammengesetzt sein.

Die erste Primärkolbenkomponente 22 ist vorzugsweise ohne ein Mitbewegen der zweiten Primärkolbenkomponente 28 verstellbar. Die vorteilhafte Verstellbarkeit der ersten Primärkolbenkomponente 22 kann (nahezu) unabhängig von einer Stellung der zweiten Primärkolbenkomponente 28 sein. Entsprechend kann auch die zweite Primärkolbenkomponente 28 ohne ein Mitbewegen der ersten Primärkolbenkomponente 22 und/oder (nahezu) unabhängig von einer Stellung der ersten Primärkolbenkomponente 22 verstellbar sein.

In einer bevorzugten Ausführungsform weist das erste Kolbenbauteil 24 eine durchgehende Aussparung 36 auf, innerhalb welcher das zweite Kolbenbauteil 30 zumindest teilweise verstellbar angeordnet ist. Das erste Kolbenbauteil 24 kann beispielsweise ringförmig ausgebildet sein. Durch die äußere Ausbildung des ersten Kolbenbauteils 24 gegenüber dem zweiten Kolbenbauteil 30 ist auf einfache Weise durch das Verstellen des ersten Kolbenbauteils 24 mittels der Fahrerbremskraft Fb mindestens eine hydraulische Verbindung/Schnüffelbohrung 38, welche die erste Druckkammer 10 mit einem (nicht dargestellten) Bremsflüssigkeitsreservoir verbindet, abdichtbar. Somit kann trotz eines Ausfalls der Bremskraftverstärker-Aktoreinrichtung 26 mittels der Fahrerbremskraft Fb die mindestens eine hydraulische Verbindung/Schnüffelbohrung 38 zwischen der ersten Druckkammer 10 und dem Bremsflüssigkeitsreservoir abgedichtet und der erste Bremsdruck in dem Druckkammervolumen aufgebaut werden. Bei einer Ausbildung des Hauptbremszylinders 12 als Tandem-Hauptbremszylinder kann zusätzlich über den aufgebauten ersten Bremsdruck der Schwimmkolben 16 so verstellt werden, dass mindestens eine hydraulische Verbindung/Schnüffelbohrung 40 zwischen der zweiten Druckkammer 14 und dem Bremsflüssigkeitsreservoir abgedichtet und ein zweiter Bremsdruck in der zweiten Druckkammer 14 aufgebaut wird. Somit hat der Fahrer trotz des Funktionsausfalls der Bremskraftverstärker-Aktoreinrichtung 26 noch die Möglichkeit, mittels der Fahrerbremskraft Fb verlässlich in den mindestens einen Bremskreis 20a und 20b des Bremssystems eines Fahrzeugs einzubremsen.

Das erste Kolbenbauteil 24 kann somit als ein Außenkolben/äußerer Ringkolben umschrieben werden. Entsprechend ist das zweite Kolbenbauteil 30 als ein in dem ersten Kolbenbauteil 24 liegender Innenkolben bezeichenbar. Zwischen den beiden Kolbenbauteilen 24 und 30 kann mindestens ein Dichtelement 25, wie beispielsweise ein Dichtring oder eine Lippendichtung, angeordnet sein, um ein Hindurchsickern von Flüssigkeit zwischen den beiden Kolbenbauteilen 24 und 30 zu verhindern. Entsprechend kann ein Heraussickern von Flüssigkeit aus dem Hauptbremszylinder 12 zwischen dem zweiten Kolbenbauteil 30 und einer Innenwand des Hauptbremszylinders 12 durch mindestens ein Dichtelement 31, welches ebenfalls ein Dichtring oder eine Lippendichtung sein kann, unterbunden werden. Auch ein unerwünschter Flüssigkeitsaustausch zwischen den beiden Druckkammern 10 und 14 kann über ein Dichtelement 33 an dem Schwimmkolben 16 zeitweise verhindert werden.

In einer bevorzugten Ausführungsform ragt ein von dem ersten Kolbenbauteil 24 weggerichteter erster Endabschnitt 42 der ersten Primärkolbenkomponente 22 in einen Innenraum hinein, welcher von mindestens einem von dem zweiten Kolbenbauteil 30 weggerichteten zweiten Endabschnitt 44 der zweiten Primärkolbenkomponente 28 aufgespannt wird. Man kann dies auch so umschreiben, dass die erste Primärkolbenkomponente 22 an dem ersten Endabschnitt 42 senkrecht zu einer Verstellrichtung 46 der ersten Primärkolbenkomponente 22 und/oder der zweiten Primärkolbenkomponente 28 eine erste Ausdehnung a1 aufweist, welche kleiner als eine zweite Ausdehnung a2 der zweiten Primärkolbenkomponente 28 an dem zweiten Endabschnitt 24 senkrecht zu der Verstellrichtung 46 ist. Ebenso kann man von einer Aufgabelung der zweiten Kraftkopplung 34 sprechen, in deren aufgespannten Innenraum die erste Kraftkopplung 32 hineinragt. Wie unten genauer beschrieben wird, ist durch die hier beschriebene vorteilhafte Ausbildung der Primärkolbenkomponenten 22 und 28 deren Zusammenwirken mit kostengünstigen und leicht produzierbaren Bremskraftverstärker-Elementen gewährleistbar.

In dem mittels der Fig. 1A bis 1C schematisch wiedergegebene Bremssystem wirkt die Primärkolbenbaugruppe mit Elementen einer Bremskraftverstärkervorrichtung 48 zusammen. Es wird darauf hingewiesen, dass die Ausbildung der zusammenwirkenden Elemente der Bremskraftverstärkervorrichtung 48 nicht auf die nachfolgend beschriebene Ausbildung der Bremskraftverstärkervorrichtung 48 limitiert ist:
Die Bremskraftverstärkervorrichtung 48 weist eine zumindest teilweise elastische Kraftübertragungskomponente, beispielsweise aus einer Reaktionsscheibe 50 und einer Reaktionsscheibenführung 52, auf. Die auf ein an dem Bremssystem angeordnetes Bremsbetätigungselement ausgeübte Fahrerbremskraft Fb ist über zumindest eine Eingangsstange 54 auf die Reaktionsscheibe 50 übertragbar. Wie unten genauer ausgeführt wird, kann zeitweise jedoch auch ein Abstand ungleich Null zwischen der Eingangsstange 54 und Reaktionsscheibe 50 vorliegen, so dass eine Übertragung der Fahrerbremskraft Fb auf die Reaktionsscheibe 50 verhindert ist.

Das Bremsbetätigungselement kann beispielsweise ein Bremspedal sein. Die Ausbildbarkeit des Bremsbetätigungselements ist jedoch nicht auf ein Bremspedal beschränkt. Die erste Primärkolbenkomponente 22 kontaktiert die Reaktionsscheibe 50 so, dass der erste Kraftübertragungskontakt vorliegt und die Fahrerbremskraft Fb auf die erste Primärkolbenkomponente 22 übertragbar ist.

Außerdem umfasst die Bremskraftverstärkervorrichtung 48 einen Verstärkerkörper 56, welcher mittels der Bremskraftverstärker-Aktoreinrichtung 26 verstellbar ist. Die zweite Primärkolbenkomponente 28 kontaktiert den Verstärkerkörper 56 so, dass der zweite Kraftübertragungskontakt vorliegt und die erste Bremsunterstützungskraft Fu1 auf die zweite Primärkolbenkomponente 28 übertragbar ist.

Optionalerweise kann der Verstärkerkörper 56 auch die zumindest teilweise elastische Kraftübertragungskomponente, welche beispielsweise die Reaktionsscheibe 50 und die Reaktionsscheibenführung 52 umfasst, kontaktieren. Auf diese Weise ist ein Vorliegen des dritten Kraftübertragungskontakts bewirkbar, wodurch die zweite Bremsunterstützungskraft Fu2 auf die erste Primärkolbenkomponente 22 übertragbar ist.

Unter dem ersten Kraftübertragungskontakt, dem zweiten Kraftübertragungskontakt und/oder dem dritten Kraftübertragungskontakt kann somit ein direkter Kontakt oder ein indirekter Kontakt verstanden werden. Der erste Kraftübertragungskontakt kann damit auch vorliegen, obwohl die erste Primärkolbenkomponente 22 das Bremsbetätigungselement nicht direkt kontaktiert. Ebenso kann der zweite Kraftübertragungskontakt zwischen der Bremskraftverstärker-Aktoreinrichtung 26 und der zweiten Primärkolbenkomponente 28 über mindestens ein Kraftübertragungselement, wie beispielsweise den Verstärkerkörper 56 bewirkt sein. Entsprechend ist auch der dritte Kraftübertragungskontakt ohne einen direkten Kontakt zwischen der ersten Primärkolbenkomponente 22 und der Bremskraftverstärker-Aktoreinrichtung 26 realisierbar.

Bei der Bremskraftverstärkervorrichtung 48 der dargestellten Ausführungsform weist der Verstärkerkörper 56 eine durchgehende Öffnung 58 auf, innerhalb welcher die Eingangsstange 56 und/oder die zumindest teilweise elastische Kraftübertragungskomponente (z.B. aus der Reaktionsscheibe 50 und der Reaktionsscheibenführung 52) verstellbar bezüglich des Verstärkerkörpers 56 angeordnet sind. Aufgrund der oben bereits beschriebenen vorteilhaften Ausbildung der ersten Kraftkopplung 32 und der zweiten Kraftkopplung 34 ist die Übertragung der Kräfte Fb, Fu1 und Fu2 von den Elementen der Bremskraftverstärkervorrichtung 48 auf die ihnen zugeordneten Kolbenbauteile 24 und 30 trotz der Führung der Eingangsstange 56 und/oder der zumindest teilweise elastischen Kraftübertragungskomponente innerhalb der durchgehenden Öffnung 58 verlässlich ausführbar. Für die Realisierung der Bremskraftverstärkervorrichtung 48 können somit kostengünstige Komponenten herkömmlicher Bremskraftverstärker eingesetzt werden. Es wird jedoch nochmals darauf hingewiesen, dass die Ausbildbarkeit der Bremskraftverstärkervorrichtung 48 nicht auf die oberen Ausführungen limitiert ist.

In Fig. 1A ist das mit der Primärkolbenbaugruppe ausgestattete Bremssystem in seiner Ausgangsstellung bei einer Fahrerbremskraft Fb gleich Null wiedergegeben. (Der Fahrer betätigt das Bremsbetätigungselement bei der in Fig. 1A wiedergegebenen Situation nicht.) Entsprechend sind auch die Unterstützungskräfte Fu1 und Fu2 gleich Null. Die Kolbenbauteile 24 und 30 und der Verstärkerkörper 56 liegen deshalb in ihren Ausgangsstellungen vor. Der erste Kolbenweg k1 des ersten Kolbenbauteils 24, der zweite Kolbenweg k2 des zweiten Kolbenbauteils 30 und der Verstellweg sv des Verstärkerkörpers 56 sind gleich Null. Außerdem liegt zwischen der Reaktionsscheibe 50 und der Eingangsstange 54 ein Luftspalt 64/Leerwegs vor.

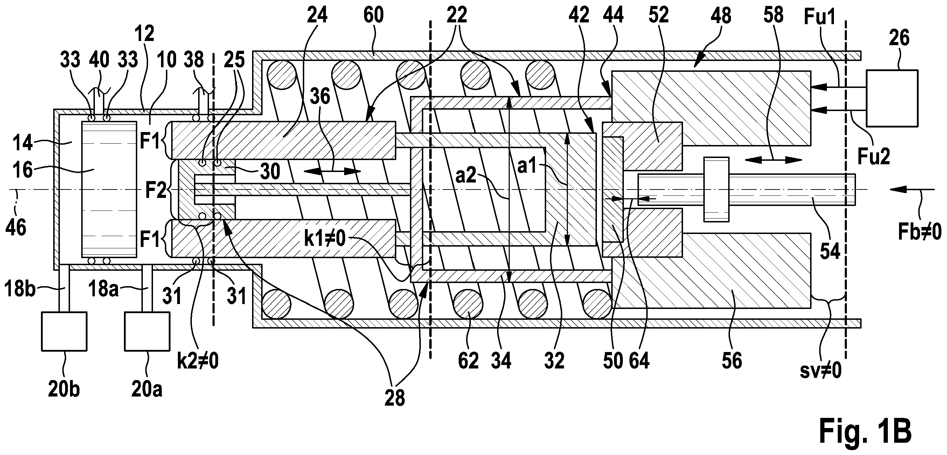

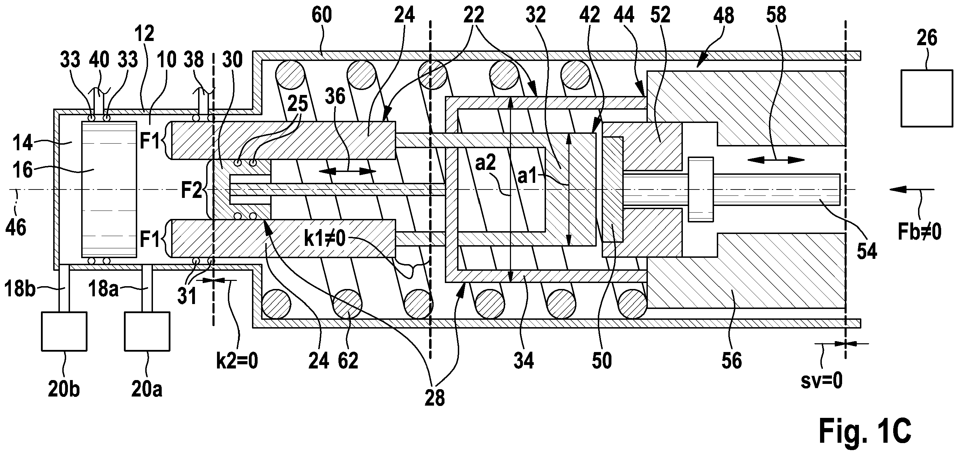

Demgegenüber zeigen die Fig. 1B und 1C das Bremssystem während einer Betätigung des Bremsbetätigungselements durch den Fahrer mit einer Fahrerbremskraft Fb ungleich Null.

Fig. 1B gibt das Bremssystem bei einem Vorliegen der Bremskraftverstärker-Aktoreinrichtung 26 in einem funktionsausführenden Zustand wieder. In diesem Fall ist eine Summe aus den Unterstützungskräften Fu1 und Fu2 ungleich Null mittels der Bremskraftverstärker-Aktoreinrichtung 26 auf den Verstärkerkörper 56 ausübbar. (Vorzugsweise ist eine Steuerung der Bremskraftverstärker-Aktoreinrichtung 26 dazu ausgelegt, die auf den Verstärkerkörper 56 auszuübende Summe aus den Unterstützungskräften Fu1 und Fu2 unter Berücksichtigung der Fahrerbremskraft Fb ungleich Null festzulegen.)

Der Verstärkerkörper 56 ist mittels der Summe der Unterstützungskräfte Fu1 und Fu2 entgegen der Rückstellkraft einer in dem Gehäuse 60 angeordneten Rückstellfeder 62 um einen Verstellweg sv ungleich Null verstellbar. Somit kann mittels der Summe der Unterstützungskräfte Fu1 und Fu2 mit dem Einbremsen in die erste Druckkammer 10 begonnen werden, obwohl der Luftspalt 64/Leerweg zwischen der Reaktionsscheibe 50 und der Eingangsstange 54 zumindest teilweise noch vorliegt. Dazu wird mittels der ersten Unterstützungskraft Fu1 das erste Kolbenbauteil 24 um einen ersten Kolbenweg k1 ungleich Null so verstellt, dass die mindestens eine Schnüffelbohrung 38 zwischen der ersten Druckkammer 10 und dem Bremsflüssigkeitsreservoir abgedichtet und die erste Einbremsfläche F1 zur Reduzierung des Druckkammervolumens verschoben wird. Zusätzlich kann mittels der zweiten Unterstützungskraft Fu2 das zweite Kolbenbauteil 30 um einen zweiten Kolbenweg k2 ungleich Null in die erste Druckkammer 10 hineingestellt werden.

In Fig. 1C ist die vorteilhafte Funktionsweise der Primärkolbenbaugruppe trotz eines Ausfalls der Bremskraftverstärker-Aktoreinrichtung 26 wiedergegeben. Obwohl keine Unterstützungskraft Fu1 und Fu2 mittels der Bremskraftverstärker-Aktoreinrichtung 26 auf den Verstärkerkörper 56 ausübbar ist, und dieser in seiner Ausgangsstellung vorliegt (sv gleich Null), kann mittels der Fahrerbremskraft Fb ungleich Null der Luftspalt 64 zwischen der Reaktionsscheibe 50 und der Eingangsstange 54 geschlossen werden. Durch den damit realisierten ersten Kraftübertragungskontakt zwischen der Eingangsstange 54 und der ersten Primärkolbenkomponente 22 kann das erste Kolbenbauteil 24 um einen ersten Kolbenweg k1 ungleich Null trotz eines Vorliegens des zweiten Kolbenbauteils 30 in seiner Ausgangsstellung (und einem zweiten Kolbenweg k2 gleich Null) verstellt werden. Der Fahrer hat damit die Möglichkeit, trotz der Funktionsbeeinträchtigung der Bremskraftverstärker-Aktoreinrichtung 26 auf einfache Weise in den Hauptbremszylinder 12 hineinzubremsen.

In der durch einen Ausfall/eine Funktionsbeeinträchtigung der Bremskraftverstärker-Aktoreinrichtung 26 (automatisch) ausgelösten (mechanischen) Rückfallebene betätigt der Fahrer nur das erste Kolbenbauteil 24. In der (mechanischen) Rückfallebene ist somit eine Einbremsflächenreduzierung von der Summe der ersten Einbremsfläche F1 und der zweiten Einbremsfläche F2 auf die erste Einbremsfläche F1 realisiert. Aufgrund der (automatisch) bewirkten Einbremsflächenreduzierung erreicht der Fahrer bei gleicher Fahrerbremskraft Fb einen höheren Bremsdruck.

Die erste Einbremsfläche F1 kann gleich der zweiten Einbremsfläche F2 sein. In diesem Fall ergibt sich bei einem Ausfall/einer Funktionsbeeinträchtigung der Bremskraftverstärker-Aktoreinrichtung 26 eine Einbremsflächenreduzierung auf die Hälfte der Summe beider Einbremsflächen F1 und F2. Damit halbiert sich auch die von dem Fahrer während einer Back-up-Bremsung (in der mechanischen Rückfallebene) aufzubringende Fahrerbremskraft Fb. Auf diese Weise kann mittels einer Fahrerbremskraft von 500N eine Fahrzeugverzögerung von 0,64 g verlässlich erreicht werden. Die eventuell mit der Reduzierung der aufzubringenden Fahrerbremskraft Fb verbundene Verlängerung des Einbremsweges wird von den meisten Fahrern kaum als nachteilig angesehen. Im Allgemeinen bevorzugen Fahrer bei einer Back-up-Bremsung eine Einbremswegverlängerung gegenüber einer Einbremskraftsteigerung.

Bei einer Back-up-Bremsung mit der hier beschriebenen Ausführungsform ist außerdem durch das Verstellen des ersten Kolbenbauteils 24 mittels der Fahrerbremskraft Fb die hydraulische Verbindung/Schnüffelbohrung 38 zwischen der ersten Druckkammer 10 und dem Bremsflüssigkeitsreservoir verlässlich abdichtbar. Dies ist realisierbar, obwohl das zweite Kolbenbauteil 30 in seiner Ausgangsstellung verharrt. Durch die wenig aufwändige und mit der Fahrerbremskraft Fb ausführbare Realisierung der Abtrennung der ersten Druckkammer 10 vom Bremsflüssigkeitsreservoir kann ein zusätzlicher Mechanismus zum Abdichten der hydraulischen Verbindung/Schnüffelbohrung 38 nach einem Erkennen des Ausfalls/der Funktionsbeeinträchtigung der Bremskraftverstärker-Aktoreinrichtung 26 eingespart werden. Somit ist eine kostenoptimale Reservoirverbindung/ Schnüffelbohrung 38 trotz der Unterteilung/Trennung des Primärkolbens in die hier beschriebene Primärkolbenbaugruppe verwendbar.

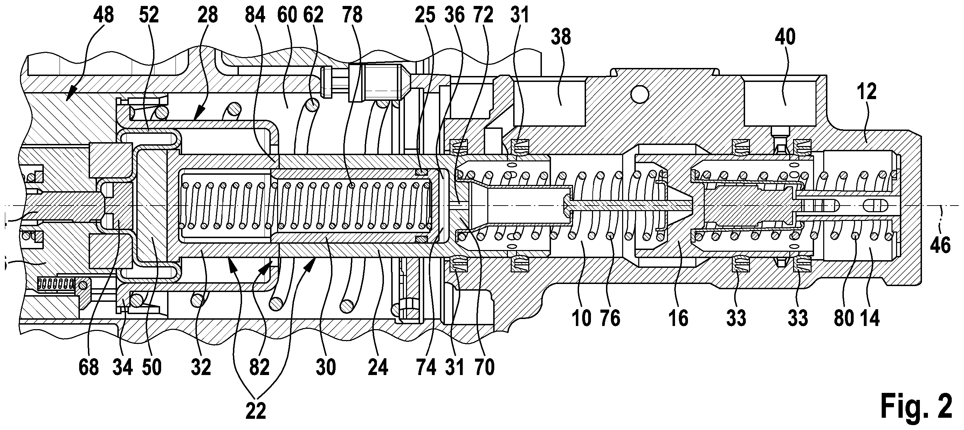

Fig. 2 zeigt eine schematische Darstellung einer zweiten Ausführungsform der Primärkolbenbaugruppe.

Die in Fig. 2 schematisch wiedergegebene Primärkolbenbaugruppe weist die oben schon beschriebenen Komponenten auf. Im Gegensatz zu der vorausgehend beschriebenen Ausführungsform ist bei der Primärkolbenbaugruppe der Fig. 2 die zweite Primärkolbenkomponente 28 einstückig ausgebildet. Ebenso ist ein zu der Reaktionsscheibe 50 ausgerichtetes Ende der Eingangsstange 54 als Pastille 68 ausgebildet.

Außerdem ist in der durchgehende Aussparung 36 eine (durchbrochene) Innenwand 70 mit mindestens einer Durchströmöffnung 72 ausgebildet. Das zweite Kolbenbauteil 30 ist an einer von einer Mitte des Hauptbremszylinders 12 weggerichteten Seite der Innenwand 70 angeordnet. Die mindestens eine Durchströmöffnung 72 hat einen Innendurchmesser, derfür ein Hinein-Verstellen des zweiten Kolbenbauteils 30 zu klein ist. Allerdings ist über die mindestens eine Durchströmöffnung 72 ein Flüssigkeitsaustausch zwischen der ersten Druckkammer 10 und einem Innenvolumen 74 zwischen der (durchbrochenen) Innenwand 70 und der zweiten Einbremsfläche F2 gewährleistet.

Die (durchbrochene) Innenwand 70 bietet eine ausreichende Kontaktierfläche für eine in der ersten Druckkammer 10 angeordnete erste Druckkammerfeder 76. Über eine Primärkolbenfeder 78 ist zusätzlich gewährleistbar, dass das Volumen des Innenvolumens 74 zu dem in der ersten Druckkammer 10 vorliegenden Bremsdruck korrespondiert. Dazu kann die Primärkolbenfeder 78 sich an einem ersten Ende an einer Innenfläche eines in den Hauptbremszylinder 12 hineinragenden Abschnitts der zweiten Primärkolbenkomponente 28 und/oder an einem zweiten Ende an einer Innenfläche eines von dem Hauptbremszylinder 12 weggerichteten Abschnitts der ersten Primärkolbenkomponente 22 abstützen. Eine zweite Druckkammerfeder 80 kann in der zweiten Druckkammer 14 angeordnet sein.

Benachbart zu einer Aufgabelung/Ausdehnungserweiterung senkrecht zu der Verstellrichtung 46 kann eine Ausnehmung 82 in der zweiten Primärkolbenkomponente 28 ausgebildet sein, durch welche ein Zwischenabschnitt 84 der ersten Primärkolbenkomponente 22 hindurchragt. Auf diese Weise ist die vorteilhafte Verstellbarkeit der beiden Primärkolbenkomponenten 22 und 28 unabhängig voneinander verlässlich gewährleistbar.

Die in den oberen Absätzen beschriebenen Primärkolbenbaugruppen sind auf einfache Weise so auslegbar, dass mittels einer Fahrerbremskraft Fb von 500N auch ohne eine Verstärkung durch die Bremskraftverstärkervorrichtung 46 eine Fahrzeugverzögerung von mindestens 3 m/s² erreichbar ist. Insbesondere kann mittels der Primärkolbenbaugruppen auch bei einem Ausfall der Bremskraftverstärker-Aktoreinrichtung 26 mittels einer Fahrerbremskraft von 500N selbst eine Fahrzeugverzögerung von 6,45 m/s² erreichbar sein. Da der Fahrer eine Fahrerbremskraft von 500N leicht selbst aufbringen kann, ist somit selbst bei einem Ausfallen der Bremskraftverstärkung noch ein Einbremsen in den Hauptbremszylinder 12 einfach ausführbar.

Für ein Beibehalten eines konventionellen Bremsgefühls kann der mechanische Verstärkungsfaktor, d. h. das Flächenverhältnis zwischen der Reaktionsscheibe 50 zu der ersten Kraftkopplung 32 neu festgelegt werden.

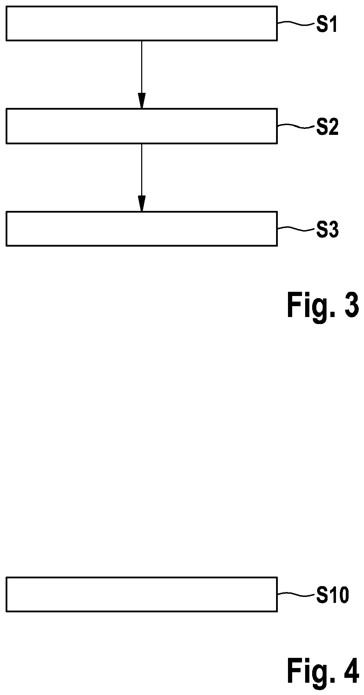

Fig. 3 zeigt ein Flussdiagramm zum Darstellen einer Ausführungsform des Herstellungsverfahrens.

Mittels des nachfolgend beschriebenen Herstellungsverfahrens ist ein Bremsgerät mit zumindest einem Hauptbremszylinder und einer Bremskraftverstärkervorrichtung herstellbar. Insbesondere sind mittels des Herstellungsverfahrens die oben beschriebenen Ausführungsbeispiele herstellbar. Die Nutzung des Herstellungsverfahrens ist jedoch nicht auf die Herstellung dieser Ausführungsbeispiele limitiert.

In einem Verfahrensschritt S1 wird eine erste Primärkolbenkomponente derart zu einer Eingangsstange angeordnet, dass eine bei einem Betrieb des Bremsgeräts auf die Eingangstange übertragene Fahrerbremskraft auf die erste Primärkolbenkomponente übertragen wird, und durch ein Verstellen eines ersten Kolbenbauteils der ersten Primärkolbenkomponente mittels der Fahrerbremskraft ein mit Flüssigkeit befüllbares Druckkammervolumen einer Druckkammer des Hauptbremszylinders reduziert wird.

Eine Bremskraftverstärker-Aktoreinrichtung wird in einem Verfahrensschritt S2 an dem Bremsgerät angeordnet. Wie oben bereits ausgeführt ist, kann für die Bremskraftverstärker-Aktoreinrichtung auch ein kostengünstiger hydraulischer oder elektromechanischer Aktor verwendet werden. Zusätzlich zu der Bremskraftverstärker-Aktoreinrichtung können noch weitere Komponenten einer Bremskraftverstärkervorrichtung angeordnet werden.

In einem Verfahrensschritt S3 wird eine zweite Primärkolbenkomponente derart zu der Bremskraftverstärker-Aktoreinrichtung angeordnet, dass bei dem Betrieb des Bremsgeräts eine von der Bremskraftverstärker-Aktoreinrichtung bereitgestellte Bremsunterstützungskraft auf die zweite Primärkolbenkomponente übertragen wird, und durch ein Verstellen eines zweiten Kolbenbauteils der zweiten Primärkolbenkomponente mittels der Bremsunterstützungskraft das mit Flüssigkeit befüllbare Druckkammervolumen reduziert wird.

Die Nummerierung der oben beschriebenen Verfahrensschritte S1 bis S3 legt keine zeitliche Reihenfolge zum Ausführen des Herstellungsverfahrens fest.

In einer besonders vorteilhaften Ausführungsform der Verfahrensschritte S1 bis S3 umfasst die erste Primärkolbenkomponente ein rohrförmiges erstes Kolbenbauteil, welches eine (durchgehende) Aussparung aufweist. Die zweite Primärkolbenkomponente kann ein zweites Kolbenbauteil aufweisen, welches innerhalb der Aussparung (nahezu) unabhängig von einer Stellung der ersten Primärkolbenkomponente verstellbar angeordnet wird. Das mit Flüssigkeit befüllbare Druckkammervolumen der Druckkammer des Hauptbremszylinders wird in diesem Fall von einer ersten Fläche des ersten Kolbenbauteils und von einer zweiten Fläche des zweiten Kolbenbauteils begrenzt. Zusätzlich zu der hier beschriebenen Anordnung der beiden Kolbenbauteile zueinander können ein von dem ersten Kolbenbauteil weggerichteter erster Endabschnitt der ersten Primärkolbenkomponente und ein von dem zweiten Kolbenbauteil weggerichteter zweiter Endabschnitt der zweiten Primärkolbenkomponente so zueinander angeordnet werden, dass der erste Endabschnitt in einen von dem zweiten Endabschnitt aufgespannten Innenraum hineinragt. Bezüglich weiterer vorteilhafter Ausbildungs- und Anordnungsmöglichkeiten der beiden Primärkolbenkomponenten wird auf die vorausgehenden Beschreibungen verwiesen.

Optionalerweise kann bei dem Herstellungsverfahren zumindest ein Teil der Eingangsstange und einer von der Eingangsstange zumindest zeitweise kontaktierten zumindest teilweise elastischen Kraftübertragungskomponente innerhalb einer durchgehenden Öffnung eines Verstärkerkörpers angeordnet werden und eine erste Kraftkopplung der ersten Primärkolbenkomponente von dem ersten Kolbenbauteil zu der zumindest teilweise elastischen Kraftübertragungskomponenten derart auslegt werden, dass bei dem Betrieb des Bremsgeräts die Fahrerbremskraft von der Eingangstange über die zumindest teilweise elastische Kraftübertragungskomponente und die erste Kraftkopplung auf das erste Kolbenbauteil übertragen wird. Ebenso kann die Bremskraftverstärker-Aktoreinrichtung an dem Verstärkerkörper angeordnet, und eine zweite Kraftkopplung der zweiten Primärkolbenkomponente von dem zweiten Kolbenbauteil zu dem Verstärkerkörper derart auslegt werden, dass bei dem Betrieb des Bremsgeräts durch ein Verstellen des Verstärkerkörpers mittels der Bremskraftverstärker-Aktoreinrichtung die Bremsunterstützungskraft über die zweite Kraftkopplung auf das in einer durchgehenden Aussparung des ersten Kolbenbauteils angeordnete zweite Kolbenbauteil übertragen wird.

Als Ergänzung kann in einem Herstellungsverfahren für ein Bremssystem eines Fahrzeugs mindestens ein Bremskreis an dem Bremsgerät ausgebildet werden.

Fig. 4 zeigt ein Flussdiagramm zum Darstellen einer Ausführungsform des Verfahrens zum Betreiben eines Bremsgeräts.

Das mittels der Fig. 4 schematisch wiedergegebene Verfahren ist beispielsweise mittels der oben beschriebenen Primärkolbenbaugruppen, bzw. mit den damit ausgestatteten Bremssystemen, ausführbar. Die Ausführbarkeit des Verfahrens ist jedoch nicht auf die oben wiedergegebenen Ausführungsformen limitiert.

Das Verfahren weist einen Verfahrensschritt S10 auf, in welchem mindestens eine Schnüffelbohrung eines Hauptbremszylinders des Bremsgeräts abgedichtet wird durch Übertragen einer Fahrerbremskraft so auf ein erstes Kolbenbauteil, dass mittels des verstellten ersten Kolbenbauteils die mindestens eine Schnüffelbohrung abgedeckt und ein mit Flüssigkeit befüllbares Druckkammervolumen einer Druckkammer des Hauptbremszylinders reduziert werden. Während dieses Verfahrensschritts S10 wird selbst eine Teilübertragung der Fahrerbremskraft auf ein zweites Kolbenbauteil, mittels welchem das mit Flüssigkeit befüllbare Druckkammervolumen der Druckkammer reduzierbar ist, verhindert.

Das Verfahren gewährleistet die oben schon beschriebenen Vorteile. Auf eine erneute Beschreibung dieser Vorteile wird deshalb hier verzichtet.

## Patentansprüche

1. Primärkolbenbaugruppe (22, 28) für einen Hauptbremszylinder (12) eines Bremssystems eines Fahrzeugs mit:
einer ersten Primärkolbenkomponente (22) mit einem ersten Kolbenbauteil (24), auf welche über einen ersten Kraftübertragungskontakt zwischen der ersten Primärkolbenkomponente (22) und zumindest einem an dem Bremssystem angeordneten Bremsbetätigungselement eine Fahrerbremskraft (Fb) derart übertragbar ist, dass durch ein Verstellen des ersten Kolbenbauteils (24) mittels der Fahrerbremskraft (Fb) ein mit Flüssigkeit befüllbares Druckkammervolumen einer Druckkammer (10) eines Hauptbremszylinders (12) des Bremssystems reduzierbar ist; und
einer zweiten Primärkolbenkomponente (28) mit einem zweiten Kolbenbauteil (30), auf welche über einen zweiten Kraftübertragungskontakt zwischen der zweiten Primärkolbenkomponente (28) und zumindest einer Bremskraftverstärker-Aktoreinrichtung (26) eine von der Bremskraftverstärker-Aktoreinrichtung (26) bereitgestellte erste Bremsunterstützungskraft (Fu1) derart übertragbar ist, dass durch ein Verstellen des zweiten Kolbenbauteils (30) mittels der ersten Bremsunterstützungskraft (Fu1) das mit Flüssigkeit befüllbare Druckkammervolumen der Druckkammer (10) zusätzlich reduzierbar ist;
wobei das erste Kolbenbauteil (24) eine durchgehende Aussparung (36) aufweist, innerhalb welcher das zweite Kolbenbauteil (30) zumindest teilweise verstellbar angeordnet ist,
und wobei durch das Verstellen des ersten Kolbenbauteils (24) mittels der Fahrerbremskraft (Fb) mindestens eine Schnüffelbohrung (38, 40) des Hauptbremszylinders (12) abdichtbar ist,
**dadurch gekennzeichnet, dass**
ein von dem ersten Kolbenbauteil (24) weg gerichteter erster Endabschnitt (42) der ersten Primärkolbenkomponente (22) in einen Innenraum hineinragt, welcher von mindestens einem von dem zweiten Kolbenbauteil (30) weg gerichteten zweiten Endabschnitt (44) der zweiten Primärkolbenkomponente (28) aufgespannt wird.

2. Primärkolbenbaugruppe (22, 28) nach Anspruch 1, wobei das erste Kolbenbauteil (24) ringförmig ausgebildet ist.

3. Primärkolbenbaugruppe (22, 28) nach Anspruch 1 oder 2, wobei auf die erste Primärkolbenkomponente (22) über einen dritten Kraftübertragungskontakt zwischen der ersten Primärkolbenkomponente (22) und zumindest der Bremskraftverstärker-Aktoreinrichtung (26) eine zweite Bremsunterstützungskraft (Fu2) derart übertragbar ist, dass durch ein Verstellen des ersten Kolbenbauteils (24) mittels der zweiten Bremsunterstützungskraft (Fu2) das mit Flüssigkeit befüllbare Druckkammervolumen reduzierbar ist.

4. Bremsgerät für ein Bremssystem eines Fahrzeugs mit:
einer Primärkolbenbaugruppe (22, 28) nach einem der vorhergehenden Ansprüche; und
einem Hauptbremszylinder (12) und/oder einer Bremskraftverstärkervorrichtung (48).

5. Bremsgerät nach Anspruch 4, mit:
einer zumindest teilweise elastischen Kraftübertragungskomponente (50, 52) , auf welche über zumindest eine Eingangsstange (54) die auf ein an dem Bremssystem angeordnetes Bremsbetätigungselement ausgeübte Fahrerbremskraft (Fb) übertragbar ist, wobei die erste Primärkolbenkomponente (22) die zumindest teilweise elastische Kraftübertragungskomponente (50, 52) so kontaktiert, dass der erste Kraftübertragungskontakt vorliegt und die Fahrerbremskraft (Fb) auf die erste Primärkolbenkomponente (22) übertragbar ist; und
einem Verstärkerkörper (56), welcher mittels der Bremskraftverstärker-Aktoreinrichtung (26) verstellbar ist, wobei die zweite Primärkolbenkomponente (28) den Verstärkerkörper (56) so kontaktiert, dass der zweite Kraftübertragungskontakt vorliegt und die ersten Bremsunterstützungskraft (Fu1) auf die zweite Primärkolbenkomponente (28) übertragbar ist.

6. Bremsgerät nach Anspruch 5, wobei der Verstärkerkörper (56) die zumindest teilweise elastische Kraftübertragungskomponente (50, 52) so kontaktiert, dass der dritte Kraftübertragungskontakt vorliegt und die zweite Bremsunterstützungskraft (Fu2) auf die erste Primärkolbenkomponente (22) übertragbar ist.

7. Bremsgerät nach Anspruch 5 oder 6, wobei der Verstärkerkörper (56) eine durchgehende Öffnung (58) aufweist, und wobei die Eingangsstange (54) und/oder die zumindest teilweise elastische Kraftübertragungskomponente (50, 52)zumindest teilweise innerhalb der durchgehenden Öffnung (58) geführt sind.

8. Bremssystem für ein Fahrzeug mit
mindestens einem Bremskreis (20a, 20b); und
einer Primärkolbenbaugruppe (22, 28) nach einem der Ansprüche 1 bis 3; und/oder
einem Bremsgerät nach einem der Ansprüche 4 bis 7.

9. Herstellungsverfahren für ein Bremsgerät mit zumindest einem Hauptbremszylinder (12) und einer Bremskraftverstärkervorrichtung (48) mit den Schritten:
Anordnen einer ersten Primärkolbenkomponente (22) derart zu einer Eingangsstange (54), dass eine bei einem Betrieb des Bremsgeräts auf die Eingangstange (54) übertragene Fahrerbremskraft (Fb) auf die erste Primärkolbenkomponente (22) übertragen wird, und durch ein Verstellen eines ersten Kolbenbauteils (24) der ersten Primärkolbenkomponente (22) mittels der Fahrerbremskraft (Fb) ein mit Flüssigkeit befüllbares Druckkammervolumen einer Druckkammer (10) des Hauptbremszylinders (12) reduziert wird; und
Anordnen einer Bremskraftverstärker-Aktoreinrichtung (26) an dem Bremsgerät; und
Anordnen einer zweiten Primärkolbenkomponente (28) derart zu der Bremskraftverstärker-Aktoreinrichtung (26), dass bei dem Betrieb des Bremsgeräts eine von der Bremskraftverstärker-Aktoreinrichtung (26) bereitgestellte Bremsunterstützungskraft (Fu1) auf die zweite Primärkolbenkomponente (28) übertragen wird, und durch ein Verstellen eines zweiten Kolbenbauteils (30) der zweiten Primärkolbenkomponente (28) mittels der Bremsunterstützungskraft (Fu1) das mit Flüssigkeit befüllbare Druckkammervolumen reduziert wird,
wobei das zweite Kolbenbauteil (30) der zweiten Primärkolbenkomponente (30) in einer Aussparung des rohrförmigen ersten Kolbenbauteils (24) der ersten Primärkolbenkomponente (22) derart angeordnet wird, dass durch das Verstellen des ersten Kolbenbauteils (24) mittels der Fahrerbremskraft (Fb) mindestens eine Schnüffelbohrung (38, 40) des Hauptbremszylinders (12) abgedichtet wird,
**gekennzeichnet durch** den Schritt, dass
ein von dem ersten Kolbenbauteil (24) weg gerichteter erster Endabschnitt (42) der ersten Primärkolbenkomponente (22) hineinragend in einem von einem zweiten Endabschnitt (44) der zweiten Primärkolbenkomponente (28), welcher von dem zweiten Kolbenbauteil (30) weg gerichtet ist, aufgespannten Innenraum angeordnet wird

10. Herstellungsverfahren nach Anspruch 9, wobei zumindest ein Teil der Eingangsstange (54) und einer von der Eingangsstange (54) zumindest zeitweise kontaktierten zumindest teilweise elastischen Kraftübertragungskomponente (50, 52) innerhalb einer durchgehenden Öffnung (58) eines Verstärkerkörpers (56) angeordnet werden und eine erste Kraftkopplung der ersten Primärkolbenkomponente (22) von dem ersten Kolbenbauteil (24) zu der zumindest teilweise elastischen Kraftübertragungskomponenten (50, 52) derart auslegt wird, dass bei dem Betrieb des Bremsgeräts die Fahrerbremskraft (Fb) von der Eingangstange (54) über die zumindest teilweise elastische Kraftübertragungskomponente (50, 52) und die erste Kraftkopplung auf das erste Kolbenbauteil (24) übertragen wird, und
die Bremskraftverstärker-Aktoreinrichtung (26) an dem Verstärkerkörper (56) angeordnet wird, und eine zweite Kraftkopplung der zweiten Primärkolbenkomponente (28) von dem zweiten Kolbenbauteil (30) zu dem Verstärkerkörper (56) derart auslegt wird, dass bei dem Betrieb des Bremsgeräts durch ein Verstellen des Verstärkerkörpers (56) mittels der Bremskraftverstärker-Aktoreinrichtung (26) die Bremsunterstützungskraft (Fu1) über die zweite Kraftkopplung auf das in einer durchgehenden Aussparung (36) des ersten Kolbenbauteils (24) angeordnete zweite Kolbenbauteil (30) übertragen wird.

11. Herstellungsverfahren für ein Bremssystem eines Fahrzeugs mit den Schritten:
Herstellen eines Bremsgeräts gemäß dem Verfahren nach einem der Ansprüche 9 oder 10; und
Ausbilden mindestens eines Bremskreises (20a, 20b) an dem Bremsgerät.

## Claims

1. Primary piston assembly (22, 28) for a master brake cylinder (12) of a brake system of a vehicle, having:
a first primary piston component (22) with a first piston part (24) to which, via a first force transmission contact between the first primary piston component (22) and at least one brake actuation element arranged on the brake system, a driver-imparted braking force (Fb) can be transmitted such that, as a result of an adjustment of the first piston part (24) by means of the driver-imparted braking force (Fb), a liquid-fillable pressure chamber volume of a pressure chamber (10) of a master brake cylinder (12) of the brake system can be reduced; and
a second primary piston component (28) with a second piston part (30) to which, via a second force transmission contact between the second primary piston component (28) and at least one brake force booster actuator device (26), a first braking assistance force (Fu1) provided by the brake force booster actuator device (26) can be transmitted such that, as a result of an adjustment of the second piston part (30) by means of the first braking assistance force (Fu1), the liquid-fillable pressure chamber volume of the pressure chamber (10) can be additionally reduced;
wherein the first piston part (24) has a through aperture (36) within which the second piston part (30) is at least partially arranged in adjustable fashion,
and wherein, as a result of the adjustment of the first piston component (24) by means of the driver-imparted braking force (Fb), at least one breather bore (38, 40) of the master brake cylinder (12) can be sealed off,
**characterized in that**
a first end section (42), directed away from the first piston part (24), of the first primary piston component (22) projects into an interior space which is spanned by at least one second end section (44), directed away from the at least one second piston part (30), of the second primary piston component (28).

2. Primary piston assembly (22, 28) according to Claim 1, wherein the first piston part (24) is of ring-shaped form.

3. Primary piston assembly (22, 28) according to Claim 1 or 2, wherein a second braking assistance force (Fu2) can be transmitted to the first primary piston component (22) via a third force transmission contact between the first primary piston component (22) and at least the brake force booster actuator device (26), in such a way that, as a result of an adjustment of the first piston part (24) by means of the second braking assistance force (Fu2), the liquid-fillable pressure chamber volume can be reduced.

4. Brake unit for a brake system of a vehicle, having:
a primary piston assembly (22, 28) according to one of the preceding claims; and
a master brake cylinder (12) and/or a brake force booster device (48).

5. Brake unit according to Claim 4, having:
an at least partially elastic force transmission component (50, 52) to which, via the at least one input rod (54), the driver-imparted braking force (Fb) exerted on a brake actuation element arranged on the brake system can be transmitted, wherein the first primary piston component (22) makes contact with the at least partially elastic force transmission component (50, 52) such that the first force transmission contact is realized and the driver-imparted braking force (Fb) can be transmitted to the first primary piston component (22); and
a booster body (56) which can be adjusted by means of the brake force booster actuator device (26), wherein the second primary piston component (28) makes contact with the booster body (56) such that the second force transmission contact is realized and the first braking assistance force (Fu1) can be transmitted to the second primary piston component (28).

6. Brake unit according to Claim 5, wherein the booster body (56) makes contact with the at least partially elastic force transmission component (50, 52) such that the third force transmission contact is realized and the second braking assistance force (Fu2) can be transmitted to the first primary piston component (22).

7. Brake unit according to Claim 5 or 6, wherein the booster body (56) has a through opening (58), and wherein the input rod (54) and/or the at least partially elastic force transmission component (50, 52) are guided at least partially within the through opening (58).

8. Brake system for a vehicle, having
at least one brake circuit (20a, 20b); and
a primary piston assembly (22, 28) according to one of Claims 1 to 3; and/or
a brake unit according to one of Claims 4 to 7.

9. Production method for a brake unit having at least one master brake cylinder (12) and having a brake force booster device (48), having the steps:
arranging a first primary piston component (22) relative to an input rod (54) such that a driver-imparted braking force (Fb) transmitted to the input rod (54) during operation of the brake unit is transmitted to the first primary piston component (22), and as a result of an adjustment of a first piston part (24) of the first primary piston component (22) by means of the driver-imparted braking force (Fb), a liquid-fillable pressure chamber volume of a pressure chamber (10) of the master brake cylinder (12) is reduced; and
arranging a brake force booster actuator device (26) on the brake unit; and
arranging a second primary piston component (28) relative to the brake force booster actuator device (26) such that, during the operation of the brake unit, a braking assistance force (Fu1) provided by the brake force booster actuator device (26) is transmitted to the second primary piston component (28), and as a result of an adjustment of a second piston part (30) of the second primary piston component (28) by means of the braking assistance force (Fu1), the liquid-fillable pressure chamber volume is reduced,
wherein the second piston part (30) of the second primary piston component (30) is arranged in a recess of the tubular first piston part (24) of the first primary piston component (22) such that, as a result of the adjustment of the first piston component (24) by means of the driver-imparted braking force (Fb), at least one breather bore (38, 40) of the master brake cylinder (12) is sealed off,
**characterized by** the step that
a first end section (42), directed away from the first piston part (24), of the first primary piston component (22) is arranged so as to project into an interior space which is spanned by a second end section (44), directed away from the second piston part (30), of the second primary piston component (28).

10. Production method according to Claim 9, wherein at least a part of the input rod (54) and of an at least partially elastic force transmission component (50, 52) with which the input rod (54) at least intermittently makes contact are arranged within a through opening (58) of a booster body (56), and a first force coupling of the first primary piston component (22) from the first piston part (24) to the at least partially elastic force transmission components (50, 52) is configured such that, during the operation of the brake unit, the driver-imparted braking force (Fb) is transmitted from the input rod (54) via the at least partially elastic force transmission component (50, 52) and the first force coupling to the first piston component (24), and
the brake force booster actuator device (26) is arranged on the booster body (56), and a second force coupling of the second primary piston component (28) from the second piston part (30) to the booster body (56) is configured such that, during the operation of the brake device, as a result of an adjustment of the booster body (56) by means of the brake force booster actuator device (26), the braking assistance force (Fu1) is transmitted via the second force coupling to the second piston part (30), which is arranged in a through recess (36) of the first piston part (24).

11. Production method for a brake system of a vehicle, having the steps:
producing a brake unit in accordance with the method according to either of Claims 9 and 10; and
forming at least one brake circuit (20a, 20b) at the brake unit.

## Revendications

1. Module de piston primaire (22, 28) pour un maître-cylindre de frein (12) d'un système de freinage d'un véhicule, comprenant :
un premier composant de piston primaire (22) avec un premier organe de piston (24), auquel peut être transférée une force de freinage du conducteur (Fb) par le biais d'un premier contact de transfert de force entre le premier composant de piston primaire (22) et au moins un élément d'actionnement de frein disposé sur le système de freinage de telle sorte que par un déplacement du premier organe de piston (24) au moyen de la force de freinage du conducteur (Fb), un volume de chambre de pression d'une chambre de pression (10) d'un maître-cylindre de frein (12) du système de freinage, pouvant être rempli avec un liquide, puisse être réduit ; et
un deuxième composant de piston primaire (28) avec un deuxième organe de piston (30), auquel peut être transférée une première force d'assistance de freinage (Fu1) fournie par le dispositif d'actionneur de servofrein (26) par le biais d'un deuxième contact de transfert de force entre le deuxième composant de piston primaire (28) et au moins un dispositif d'actionneur de servofrein (26), de telle sorte que le volume de chambre de pression de la chambre de pression (10) pouvant être rempli avec du liquide puisse être réduit davantage par un déplacement du deuxième organe de piston (30) au moyen de la première force d'assistance de freinage (Fu1) ;
le premier organe de piston (24) présentant un évidement continu (36) à l'intérieur duquel le deuxième organe de piston (30) est disposé de manière déplaçable au moins en partie,
et au moins un alésage de purge (38, 40) du maître-cylindre de frein (12) pouvant être étanchéifié par le déplacement du premier organe de piston (24) au moyen de la force de freinage du conducteur (Fb),
**caractérisé en ce**
**qu'**une première portion d'extrémité (42) du premier composant de piston primaire (22) orientée à l'écart du premier organe de piston (24) pénètre dans un espace interne qui est formé par au moins une deuxième portion d'extrémité (44) du deuxième composant de piston primaire (28) orientée à l'écart du deuxième organe de piston (30).

2. Module de piston primaire (22, 28) selon la revendication 1, dans lequel le premier organe de piston (24) est réalisé sous forme annulaire.

3. Module de piston primaire (22, 28) selon la revendication 1 ou 2, dans lequel une deuxième force d'assistance de freinage (Fu2) peut être transmise au premier composant de piston primaire (22) par le biais d'un troisième contact de transfert de force entre le premier composant de piston primaire (22) et au moins le dispositif d'actionneur de servofrein (26) de telle sorte que le volume de la chambre de pression pouvant être rempli avec du liquide puisse être réduit par un déplacement du premier organe de piston (24) au moyen de la deuxième force d'assistance de freinage (Fu2).

4. Appareil de freinage pour un système de freinage d'un véhicule, comprenant :
un module de piston primaire (22, 28) selon l'une quelconque des revendications précédentes ; et
un maître-cylindre de frein (12) et/ou un dispositif de servofrein (48).

5. Appareil de freinage selon la revendication 4, comprenant :
un composant de transfert de force au moins en partie élastique (50, 52) auquel peut être transmise la force de freinage du conducteur (Fb) exercée au niveau d'un élément d'actionnement de frein disposé sur le système de freinage par le biais d'au moins une tige d'entrée (54), le premier composant de piston primaire (22) venant en contact avec le composant de transfert de force au moins en partie élastique (50, 52) de telle sorte que le premier contact de transfert de force soit établi et que la force de freinage du conducteur (Fb) puisse être transmise au premier composant de piston primaire (22) ; et
un corps d'amplificateur (56) qui peut être déplacé au moyen du dispositif d'actionneur de servofrein (26), le deuxième composant de piston primaire (28) venant en contact avec le corps d'amplificateur (56) de telle sorte que le deuxième contact de transfert de force soit établi et que la première force d'assistance de freinage (Fu1) puisse être transmise au deuxième composant de piston primaire (28).

6. Appareil de freinage selon la revendication 5, dans lequel le corps d'amplificateur (56) vient en contact avec le composant de transfert de force au moins en partie élastique (50, 52) de telle sorte que le troisième contact de transfert de force soit établi et que la deuxième force d'assistance de freinage (Fu2) puisse être transmise au premier composant de piston primaire (22).

7. Appareil de freinage selon la revendication 5 ou 6, dans lequel le corps d'amplificateur (56) présente une ouverture continue (58), et la tige d'entrée (54) et/ou le composant de transfert de force au moins en partie élastique (50, 52) sont guidés au moins en partie à l'intérieur de l'ouverture continue (58).

8. Système de freinage pour un véhicule, comprenant
au moins un circuit de freinage (20a, 20b) ; et
un module de piston primaire (22, 28) selon l'une quelconque des revendications 1 à 3 ;
et/ou
un appareil de freinage selon l'une quelconque des revendications 4 à 7.

9. Procédé de fabrication pour un appareil de freinage comprenant au moins un maître-cylindre de frein (12) et un dispositif de servofrein (48), comprenant les étapes suivantes :
agencement d'un premier composant de piston primaire (22) par rapport à une tige d'entrée (54) de telle sorte qu'une force de freinage du conducteur (Fb) transmise à la tige d'entrée (54) lors d'un fonctionnement de l'appareil de freinage soit transmise au premier composant de piston primaire (22), et qu'un volume de chambre de pression d'une chambre de pression (10) du maître-cylindre de frein (12), pouvant être rempli de fluide, soit réduit par un déplacement d'un premier organe de piston (24) du premier composant de piston primaire (22) au moyen de la force de freinage du conducteur (Fb) ; et
agencement d'un dispositif d'actionneur de servofrein (26) sur l'appareil de freinage ; et
agencement d'un deuxième composant de piston primaire (28) par rapport au dispositif d'actionneur de servofrein (26) de telle sorte que lors du fonctionnement de l'appareil de freinage, une force d'assistance de freinage (Fu1) fournie par le dispositif d'actionneur de servofrein (26) soit transmise au deuxième composant de piston primaire (28), et que le volume de chambre de pression pouvant être rempli avec du liquide soit réduit par un déplacement d'un deuxième organe de piston (30) du deuxième composant de piston primaire (28) au moyen de la force d'assistance de freinage (Fu1),
le deuxième organe de piston (30) du deuxième composant de piston primaire (30) étant disposé dans un évidement du premier organe de piston tubulaire (24) du premier composant de piston primaire (22) de telle sorte qu'au moins un alésage de purge (38, 40) du maître-cylindre de frein (12) soit étanchéifié par le déplacement du premier organe de piston (24) au moyen de la force de freinage du conducteur (Fb),
**caractérisé par** l'étape suivante selon laquelle une première portion d'extrémité (42) du premier composant de piston primaire (22), orientée à l'écart du premier organe de piston (24), est disposée de manière à pénétrer dans un espace interne formé par une deuxième portion d'extrémité (44) du deuxième composant de piston primaire (28), qui est orientée à l'écart du deuxième organe de piston (30).

10. Procédé de fabrication selon la revendication 9, dans lequel au moins une partie de la tige d'entrée (54) et d'un composant de transfert de force au moins en partie élastique (50, 52) au moins temporairement mis en contact avec la tige d'entrée (54) sont disposés à l'intérieur d'une ouverture continue (58) d'un corps d'amplificateur (56) et un premier couplage de force du premier composant de piston primaire (22) du premier organe de piston (24) au composant de transfert de force au moins en partie élastique (50, 52) est conçu de telle sorte que lors du fonctionnement de l'appareil de freinage, la force de freinage du conducteur (Fb) soit transmise depuis la tige d'entrée (54) par le biais du composant de transfert de force au moins en partie élastique (50, 52) et du premier couplage de force au premier organe de piston (24), et
le dispositif d'actionneur de servofrein (26) est disposé sur le corps d'amplificateur (56), et un deuxième couplage de force du deuxième composant de piston primaire (28) du deuxième organe de piston (30) au corps d'amplificateur (56) est conçu de telle sorte que lors du fonctionnement de l'appareil de freinage, la force d'assistance de freinage (Fu1) soit transmise par un déplacement du corps d'amplificateur (56) au moyen du dispositif d'actionneur de servofrein (26) par le biais du deuxième couplage de force au deuxième organe de piston (30) disposé dans un évidement continu (36) du premier organe de piston (24).

11. Procédé de fabrication pour un système de freinage d'un véhicule comprenant les étapes suivantes :
fabrication d'un appareil de freinage selon le procédé selon l'une quelconque des revendications 9 ou 10 ; et
réalisation d'au moins un circuit de freinage (20a, 20b) au niveau de l'appareil de freinage.
